# EUROPÄISCHE PATENTSCHRIFT

(11) **EP 1 278 792 B1**
(45) Veröffentlichungstag und Bekanntmachung des Hinweises auf die Patenterteilung: **26.10.2005**
(21) Anmeldenummer: 01933840.9
(22) Anmeldetag: 17.04.2001
(51) Int. Cl.: C08G 18/70, C09J 175/04

(54) **KLEBSTOFFZUBEREITUNGEN**
ADHESIVE PREPARATIONS
PREPARATIONS ADHESIVES

(30) Priorität: 25.04.2000 DE 10020160
(43) Veröffentlichungstag der Anmeldung: 29.01.2003
(73) Patentinhaber: Bayer MaterialScience AG, 51368 Leverkusen (DE)
(72) Erfinder: GANSTER, Otto, 51519 Odenthal (DE); WERNER, Ralf, 41539 Dormagen (DE); BÜCHNER, Jörg, 51467 Bergisch Gladbach (DE); HENNING, Wolfgang, 51515 Kürten (DE)
(86) Internationale Anmeldenummer: PCT/EP2001/004352
(87) Internationale Veröffentlichungsnummer: WO 2001/081444

(56) Entgegenhaltungen:
- EP-A- 0 922 720
- WO-A-97/45475
- US-A- 5 331 039

## Beschreibung

Die vorliegende Erfindung betrifft Zubereitungen von Isocyanaten mit wäßrigen isocyanatreaktiven Polymerdispersionen, Verfahren zu ihrer Herstellung und ihre Verwendung für Klebeverbindungen oder Beschichtungen.

Bei den Isocyanaten handelt es sich um feinteilige Di- und Polyisocyanat-Pulver, die Zubereitungen werden zur Herstellung für bei Raumtemperatur vernetzende Klebeverbindungen oder Beschichtungen verwendet.

Als bevorzugte Polyisocyanate werden Dimerisierungsprodukte, Trimerisierungsprodukte und Harnstoff-Derivate des TDI bzw. IPDI verwendet.

Für die erfindungsgemäßen Zubereitungen eignen sich die an sich bekannten isocyanatreaktiven wäßrigen Dispersionen von Homo- und Co-Polymerisaten olefinisch ungesättigter Monomere und Polyurethandispersionen.

Geeignete Polymerisate olefinisch ungesättigter Monomere werden z.B. in EP-A 0206 059 bzw. DE-A 40 36 927 oder in EP-A 0 204 970 genannt. Es handelt sich beispielsweise um Homo- und Co-Polymerisate auf Basis von Vinylestern von Carbonsäuren mit 2 -18, vorzugsweise 2 bis 4, Kohlenstoffatomen wie insbesondere Vinylacetat, gegebenenfalls mit bis zu 70 Gew.% bezogen auf die Gesamtmenge an anderen olefinisch ungesättigten Monomeren und /oder solche von Homo- oder Co-polymerisaten von (Meth)Acrylsäureestern von Alkoholen mit 1 bis 18, vorzugsweise 1 bis 4, Kohlenstoffatomen wie insbesondere (Meth)Acrylsäure-, -methyl-, -ethyl-, -propyl-, -hydroxyethyl- oder -hydroxypropyl-estern, gegebenfalls zusammen mit bis zu 70 Gew.% an anderen olefinisch ungesättigten Monomeren. Isocyanatreaktive Funktionen entehen durch Co-Polymerisation OH- oder NH-funktioneller Monomerer wie z.B. Hydroxyethyl- oder Hydroxypropyl-(meth)acrylat, Butandiol-monoacrylat, ethoxylierter oder propoxylierter (Meth)Acrylate, N-Methylol-acrylamid, tert.-Butylamino-ethyl-methacrylat oder (Meth)Acrylsäure. Auch Glycidylmethacrylat und Allylglycidylether können copolymerisiert werden. Die anschließende Umsetzung der Epoxygruppen mit Aminen oder Aminoalkoholen führt dann zu sekundären Aminogruppen..

Ebenfalls eignen sich wäßrige Dispersionen von Polymerisaten bzw. Copolymerisaten des 2-Chlorbutadien-1,3, gegebenfalls mit anderen olefinisch ungesättigten Monomeren der oben beispielhaft genannten Art, z.B. solchen eines Chlorgehalts von ca. 30 - 40 Gew.%, insbesondere eines Chlorgehalts von ca. 36 Gew.%. Die Reaktivität der a priori nicht isocyanatreaktiven Polymerisate des 2-Chlorbutadiens ergibt sich durch einen im Verlauf des Herstellprozesses ablaufenden Austausch hydrolysierbarer Cl-Gruppen durch OH-Gruppen oder gemäß EP-A 0 857741.

Geeignete wäßrige Polyurethandispersionen sind solche der an sich bekannten Art, wie sie z.B. in US-A 3 479 310, GB-A 1 076 688, US-A 4 092 286, DE-A 2 651 505, US-A 4 190 566, DE-A 2 732 131 oder DE-A 2 811 148 beschrieben sind.

Polyurethandispersionen, welche aufgrund ihrer linearen, bei Temperaturen unterhalb 100°C, vorzugsweise bei T < 60°C kristallisierten Polymerkette für wärmeaktivierte Verklebungen verwendet werden, ergeben ohne zusätzliche Isocyanatvernetzung niedrige 1K-Wärmefestigkeiten. Deshalb werden sie üblicherweise unter Mitverwendung von flüssigen, in der wäßrigen Dispersion emulgierbaren Polyisocyanaten, z. B. Desmodur® DA (Bayer AG), verarbeitet. Durch diese 2-komponentige (2K) Verarbeitung erreicht man Verklebungen mit deutlich besseren Wärmefestigkeitswerten. Beispielsweise ergibt Dispercoll® U 54 (Handelsübliche Polyurethandispersion für wärmeaktivierbare Klebstoffe, Bayer AG) ohne Isocyanatvernetzung bei Verklebung eines SBR-Gummis (SBR-Vulkanisat (Nora-Test), PFI - Prüf- und Forschungsinstitut für die Schuhindustrie - Pirmasens) eine Erweichungstemperatur der Klebeverbindung (Softening Point) von ca. 65°C, vernetzt mit Desmodur® DA ergeben sich ca. 130°C. Jedoch wird dieser Gewinn erkauft durch einen höheren technischen Aufwand für die 2K-Verarbeitung, verbunden mit möglichen Fehlerquellen, die in der für jeden einzelnen Ansatz erforderlichen, separat herzustellenden, homogenen und bezüglich der Menge präzisen Eindispergierung des Vernetzerisocyanats bestehen.

Die Haltbarkeit dieser Mischungen reicht zwar für eine ungestörte Endverarbeitung des Klebstoffs im Verlauf eines Tages, aber sie reicht nicht für eine Einbeziehung dieses Vernetzers in die Klebstoff-Formulierung beim Klebstoffhersteller.

1K-Reaktionsmassen mit pulverförmigen Polyisocyanaten, in denen die Isocyanate ohne eine vorherige Oberflächendesaktivierung in die Formulierung eingearbeitet werden, sind schon lange bekannnt. DE-A 1 570 548 beschreibt lagerfähige, wännehärtbare Polyurethanmassen mit pulverisierten, nicht oberflächendesaktivierten Uretdionisocyanaten. Sie sind bei RT mehrere Wochen bis einige Monate lagerfähig und müssen durch 30 - 90 Minuten andauerndes Erhitzen auf Temperaturen von 100 - 160°C ausgehärtet werden. Diese Veröffentlichung nimmt jedoch keinen Bezug auf die Verwendung pulverförmiger, nicht desaktivierter Feststoffisocyanate in wäßrigen Polymerdispersionen.

EP-A 0 467168 beansprucht Zubereitungen aus oberflächendesaktivierten wäßrigen Polyisocyanat-Feststoffsuspensionen und NCO-reaktive Gruppen tragenden Polymerdispersionen für flexible Beschichtungen textiler Substrate. Die Zubereitungen besitzen eine lange Lagerfähigkeit. Die Beschichtungen werden gleichzeitig mit dem Trocknen in der Wärme nachvernetzt. Die Zubereitung wird durch Mischen der Polymerdispersion mit der Dispersion des oberflächendesaktivierten Polyisocyanats hergestellt. Die Dispergierung und Oberflächendesaktivierung des Polyisocyanats sind dabei nach EP-A 0 204 970 ein separater Arbeitsgang vor der Einarbeitung in die Polymerdispersion.

EP-A 0 922 720 beschreibt die Verwendung wäßriger Dispersionen, die wenigstens ein oberflächendesaktiviertes festes Polyisocyanat und wenigstens ein mit Isocyanat reaktives Polymer enthalten zur Herstellung bei Raumtemperatur lagerstabiler, latenreaktiver Schichten oder Pulver, die durch Erwärmung zur Vernetzung gebracht werden. Die Herstellung der Polyisocyanat-Dispersion und die Oberflächendesaktivierung erfolgen ebenfalls nach EP-A 0 204 970 als separater Arbeitsgang vor der Einarbeitung in die Dispersion. Die Desaktivierung des Isocyanats führt zwar zu einer relativ guten Lagerfähigkeit des getrockneten Polymerfilms, aber dafür ist der zusätzliche Arbeitsgang in Kauf zu nehmen.

Die Suche nach in der Endverarbeitung einkomponentigen, d.h. ohne weitere Vemetzungsmittelzusätze verarbeitbaren wäßrigen Dispersionsklebstoff-Systemen, welche nach Applikation ohne zusätzliche Maßnahmen zu wärmebeständigen Klebungen vernetzen, ist seit langer Zeit ein intensiv bearbeitetes Gebiet.

Der vorliegenden Erfindung lag daher die Aufgabe zugrunde, dem Klebstoffverarbeiter einen einkomponentig einsetzbaren, ohne Topfzeitprobleme und ohne besondere Nachbehandlung selbstvernetzenden Klebstoff zur Verfügung zu stellen.

Diese Aufgabe wird durch die erfindungsgemäßen lagerstabilen Zubereitungen feinteiliger Di- und Polyisocyanat-Pulver mit wäßrigen isocyanatreaktiven Polymerdispersionen, Verfahren zu ihrer Herstellung und ihre Verwendung für bereits bei Raumtemperatur vernetzende Klebeverbindungen gelöst.

Die Herstellung der erfindungsgemäßen lagerstabilen Zubereitungen erfolgt durch Mischen feinteiliger Di- und Polyisocyanat-Pulver oder entsprechender Pasten in inerten Trägerflüssigkeiten mit wäßrigen isocyanatreaktiven Polymerdispersionen.

Eine herausragende Eigenschaft der erfindungsgemäßen Zubereitungen resultiert daraus, daß entgegen der bekannten Arbeitsweise die feinteiligen festen Polyisocyanate direkt, also ohne vorausgehende Desaktivierung oder Verkapselung, in die wäßrigen Polymerdispersionen eingemischt wurden (siehe Beispiele, Punkt 1). Man erhält überraschenderweise Zubereitungen, die bei den üblichen Lagertemperaturen von 20° - 30°C ohne wesentliche Verluste im Isocyanatgehalt gelagert werden können (siehe Beispiele, Punkt 2)

Die mit solchen Zubereitungen hergestellten Klebeverbindungen vernetzen selbst bei Raumtemperatur im Verlauf mehrerer Tage auch dann, wenn keine zusätzliche Temperung durchgeführt wird (siehe Beispiele, Punkte 3.1. und 3.2.) - im Gegensatz zu den Beispielen in EP-A 0 922 720, wo bei Verwendung eines desaktivierten Feststoffisocyanat zur Vernetzung ein zusätzlicher Temperschritt bei erhöhter Temperatur erforderlich ist. Ebenfalls im Gegensatz zu EP-A 0 922 720 sind keine Katalysatoren für die Beschleunigung der Reaktion der Isocyanate erforderlich. Insbesondere in Polyurethandispersionen, welche im allgemeinen Polyesterpolyole als Basisrohstoffe enthalten, wäre die Verwendung von Metallkatalysatoren im Hinblick auf die Hydrolysenbeständigkeit der Polymerkette sehr nachteilig.

Die Vernetzung mit den erfindungsgemäßen Zubereitungen führt unter anderem zu einer erheblich erhöhten Erweichungstemperatur und Hydrolysenbeständigkeit der Klebung. Darüber hinaus werden im Vergleich zu flüssigen Vernetzerisocyanaten (Desmodur® DA) sowie insbesondere auch im Vergleich zu desaktivierten Feststoffisocyanaten auf Weich-PVC im Schälversuch deutlich erhöhte Festigkeiten gefunden.

Von besonderer Bedeutung ist, daß bei Verwendung auf Basis kristallisierender Polymerketten hergestellter Polyurethandispersionen die Klebfilme vor der bei solchen Polymeren erforderlichen wärmeaktivierten Verklebung - das heißt Verklebung durch Dekristallisation der Polymerkette - einige Tage oder Wochen lang bei RT gelagert werden können, ohne daß die Wärmeaktivierbarkeit durch eine beginnende Vernetzung beeinträchtigt wird. Nach Durchführung der wärmeaktivierten Verklebung unter Verwendung der richtigen Aktivierbedingungen (siehe Beispiele, Punkt 3.1.1) läuft jedoch die Vernetzungsreaktion innerhalb einiger Tage bei Raumtemperatur problemlos ab.

Durch den Einsatz der erfindungsgemäßen Zubereitungen, deren wesentliche Eigenschaft darin besteht, daß die Feststoffisocyanate ohne vorhergehende Desaktivierung mit den Polymerdispersionen gemischt werden, entfällt also der zusätzliche Aufwand für die Temperung der Verklebung und die Gefahr der Hydrolyse der Polymerkette durch ggf. zu verwendende Katalysatoren wird vermieden.

Die erfindungsgemäßen Zubereitungen weisen gegenüber den in EP-A 0 922 720 beschriebenen zwar eine verminderte Lagerbeständigkeit des getrockneten Klebfilms auf. Dies stellt jedoch kein anwendungstechnisch relevantes Problem dar, denn die Zeitspanne bis zum Eintritt einer die Verklebarkeit behindernden Vernetzung ist auch ohne Desaktivierung der Polyisocyanatoberfläche immer noch völlig ausreichend (siehe Beispiele, Punkt. 4.1 und 4.2).

Zur Herstellung der erfindungsgemäßen Zubereitungen wird das pulverförmige, ggf. z. B. durch Sieben auf die gewünschte Komgrößengrenze eingestellten Polyisocyanat in die Polymerdispersion eingemischt. Zur Vereinfachung des Mahlvorgangs und zur Vermeidung einer Staubbildung kann das Pulver in einer inerten Trägerflüssigkeit angepastet sein. Das Verfahren vereinfacht die bisherigen, weil auf die separate Herstellung einer Dispersion des "desaktivierten" Feststoffisocyanats verzichtet wird. Insbesondere wird auch der auf die kolloidchemische Stablität sich negativ auswirkende Überschuß des Hüllamins in der Dispersion des desaktivierten Feststoffisocyanats vermieden. Der Überschuß des Hüllamins wäre dort durch Abfiltrieren des desaktivierten Feststoffs von der wässrigen Phase zu beseitigen. Dieser aufwendige Fertigungsschritt wird bei der erfindungsgemäßen Verwendung der nicht-desaktivierten Feststoffisocyanate nicht benötigt.

Die Herstellung erfolgt gegebenenfalls unter Mitverwendung von Zusätzen wie Schutzkolloiden, Emulgatoren, Verdickern, Lösungsmitteln, Weichmachern, Pigmenten, Füllstoffen, Farbstoffen und anderen für die Herstellung von Dispersionsklebstoffen oder Beschichtungen üblichen Hilfsstoffen.

Die Polyisocyanate weisen vorzugsweise Schmelz- bzw. Erweichungstemperaturen von > 30°C und werden als feinteilige Pulver oder als Pasten in inerten Trägerflüssigkeiten mit einem mittleren Teilchendurchmesser von im wesentlichen unter 100 µm, bevorzugt < 50 µm, in die wäßrigen Dispersionen eingemischt.

Die Viskosität der Dispersionen wird bevorzugt auf mindestens 2000 mPas eingestellt.

Bevorzugte Polymerdispersionen sind isocyanatreaktive Polyurethan- bzw. Polyharnstoffdispersionen. Ebenfalls bevorzugt sind wäßrige Dispersionen von Polymerisaten des 2-Chlorbutadiens. Besonders bevorzugt sind wäßrige Polyurethandispersionen, die aus kristallisierten Polymerketten aufgebaut sind, welche bei Messung mittels thermomechanischer Analyse bei Temperaturen < +110 °C, bevorzugt bei Temperaturen < +90 °C und besonders bevorzugt bei Temperaturen < +65 °C zumindest partiell dekristallisieren.

Als bevorzugte Polyisocyanate werden Dimerisierungsprodukte, Trimerisierungsprodukte und Harnstoff-Derivate des TDI bzw. IPDI verwendet. Besonders bevorzugt sind Dimerisationsprodukte bzw. Harnstoffderivate des TDI.

Vorzugsweise werden die erfindungsgemäßen Dispersionen für die Herstellung von Beschichtungen oder Klebeverbindungen, welche nach Trocknung ohne zusätzliche Wärmezufuhr im Verlauf einiger Tage vernetzen, eingesetzt. Diese besitzen eine deutlich verbesserte Erweichungstemperatur, Wasser- und Lösemittelfestigkeit.

Zur Herstellung derartiger Klebeverbindungen wird der auf dem zu verklebenden Substrat getrocknete Klebstoffauftrag durch kurzzeitiges, vorzugsweise weniger als 60 Sekunden andauerndes Erwärmen auf T > 65°C dekristallisiert und im dekristallisierten Zustand gefügt.

Hierzu kann auch der Klebstoffauftrag auf einem Substrat getrocknet und dann mit einem durch Erwärmung plastisch erweichten Folienmaterial verpreßt werden, sodaß die Folie im Kontakt mit dem Klebefilm eine Temperatur oberhalb der Dekristallisationstemperatur des Polymers im Klebfilm wie vorstehend beschrieben annimmt.

### Beispiele

### 1. Herstellung der Zubereitung aus Polymer-Dispersion und TDI-Dimer (Desmodur® TT)

100g einer handelsüblichen Polyurethandispersion (Dispercoll® U 54, Dekristallisationstemperatur: ca. 55°C, Bayer AG, Leverkusen) werden durch Zugabe von Borchigel® L 75 (Borchers GmbH, D 40765 Monheim) auf eine Viskosität von ca. 3000 mPas (23°C) eingestellt. 5g eines pulverisierten Desmodur® TT (Rhein Chemie, D 68204 Mannheim, Teilchengröße: < 63 µm; NCO-Gehalt: 24,0%; Fp.: 156°C) werden unter Verwendung eines Ultraturrax bei 9500 Upm (2,5 Minuten) eindispergiert. Es entsteht eine koagulatfreie Mischung mit einem sofort gemessenen NCO-Gehalt von 1,3%.

### 2. Lagerstabilität des Isocyanat-Gehalts in der Zubereitung aus Desmodur® TT und Dispercoll® U 54

In der frisch hergestellten sowie in der über einen Zeitraum von bis zu 3 Monaten bei 23°C gelagerten flüssigen Mischung wird der Isocyanatgehalt bestimmt. Man erkennt in der folgenden Tabelle, daß der Gehalt an reaktiven Isocyanatgruppen über drei Monate weitgehend unverändert bleibt.

| **Lagerzeit der Zubereitung** | **NCO-Gehalt (%)*** | **Viskosität bei 23 °C (η)** |
|---|---|---|
| sofort | 1,3 | 3000. |
| 24 h | 1,3 | 2700 |
| 1 Woche | 1,1 | 2700 |
| 2 Wochen | 1,1 | 3200 |
| 4 Wochen | 1,2 | 3500 |
| 8 Wochen | 1,2 | 3700 |
| 12 Wochen | 1,2 | 4100 |

| | | |
|---|---|---|
| *: Die Proben wurden zur Vermeidung von Inhomogenitäten durch Sedimentation vor der NCO-Bestimmung aufgeschüttelt. | | |

### 3. Einfluß der Lagerung der flüssigen Klebstoffzubereitung auf die Klebeigenschaften nach Verklebung durch Wärmeaktivierung

### 3.1 Bestimmung der Wärmefestigkeit (Softening Point = Scherbelastung) nach Schockaktivierung.

### Herstellung der Proben:

Die Prüfkörper aus Nora-Gummi (SBR) bzw. Weich-PVC (30% DOP) werden unmittelbar vor dem Klebstoffauftrag mit Schleifpapier (Körnung = 80) angerauht. Die Klebstofformulierung wird mit einem Pinsel beidseitig auf die 20 x 10 mm große Klebefläche aufgetragen. Die Klebstoffschicht wird 60 min. bei 23°C / 50% rel. Feuchte getrocknet.

### Schockaktivierung:

Die Klebeflächen werden 3, 5 bzw. 10 Sekunden mit einem IR-Strahler der Fa. Funk (Schockaktiviergerät 2000) bestrahlt. Dabei erwärmt sich der Klebefilm auf dem Nora-Gummi je nach Aktivierdauer auf 49°C, 65°C bzw. 115°C. Eine 10 Sekunden-Aktivierung des Klebfilms auf der Weich-PVC-Probe ergibt eine Oberflächentemperatur von 86°C. Die Dekristallisationstemperatur der Polymerkette der verwendeten Polyurethandispersion (Dispercoll® U 54) liegt bei 55°C, welche bei einer Aktivierdauer von 5 bzw. 10 Sekunden überschritten wird. Die Verklebung erfolgt sofort nach Wärmeaktivierung der Klebstoff-beschichteten Prüfkörper, indem die aktivierten Klebeschichten gegeneinandergelegt und in einer Presse eine Minute lang bei 4 bar verpresst werden. Die so hergestellten Prüfkörper werden 7 Tage bei 23°C und 50% rel. Feuchte gelagert.

### Wärmeprüfung:

Die Prüfkörper werden mit 4kg belastet und in einem Heizschrank innerhalb von 30 min. auf 40°C temperiert. Anschließend werden die Prüfkörper mit einer linearen Heizrate von 0,5 °C/min. auf 150°C aufgeheizt. Die Erweichungstemperatur, d.h. die Temperatur in °C bei der die Klebung unter der 4kg Last versagt, wird registriert. Es werden jeweils 5 Einzelmessungen durchgeführt.

### 3.1.1. Ergebnisse auf SBR (NORA-Gummi)

| **Lagerzeit derZubereitung** | **Aktivierbedingungen** | | |
|---|---|---|---|
| | **3" (49°C)** | **5" (65°C)** | **10" (105°C)** |
| | **Erweichung** (°C)^{*)} | | |
| sofort | 69 | 107 | 138 |
| 1 Woche | 69 | 107 | 136 |
| 2 Wochen | 66 | 92 | 141 |
| 3 Wochen | 63 | 72 | 135 |
| 4 Wochen | 61 | 69 | 139 |
| 5 Wochen | 59 | 63 | 129 |

| | | | |
|---|---|---|---|
| *: Dispercoll® U 54 ergibt bei gleicher Verklebung ohne Vernetzung eine Erweichungstemperatur von ca. 65 °C. | | | |

### 3.1.2. Ergebnisse: Weich-PVC

### 10" Schockaktivierung entsprechend einer Oberflächentemperatur des Klebfilms von 86°C.

| **Lagerzeit der Zubereitung** | **Erweichung (°C)*** |
|---|---|
| sofort | 111 |
| 1 Woche | 113 |
| 5 Wochen | 110 |
| 8 Wochen | 102 |

| | |
|---|---|
| *: Dispercoll® U 54 ergibt bei gleicher Verklebung ohne Vernetzung eine Erweichungstemperatur von ca. 65 °C. | |

### 3.2. Wärmeschalfestigkeit nach Verklebung im Heißpreßverfahren (Buchenhotz/Hart-PVC)

### Herstellung der Prüfkörper:

Die nach 1. hergestellte Zubereitung aus Dispercoll® U 54 und Desmodur® TT wird auf eine gehobelte Buchenholzplatte (nach DIN 53-254, Abmessungen: 50 x 140 x 4 mm) unter Verwendung eines Pinsels aufgetragen. Der Klebstoffauftrag erfolgt nur auf eine Seite des Buchenholzprüfkörpers. Die Klebfläche beträgt 50 x 110 mm. Nach einer Trocknungszeit von 30 Minuten bei Umgebungstemperatur wird eine zweite Klebstoffschicht über die erste aufgetragen und anschließend 60 Minuten bei Umgebungstemperatur getrocknet. Nach der Trocknungszeit wird mit der nicht strukturierten Seite einer Hart-PVC-Kaschierfolie (Typ: Benelitfolie RTF, Abmessungen: 50 x 210 x 0,4) in einer Membranpresse 10 Sekunden bei 4 bar eff. Druck und einer Fugentemperatur von 90 °C gepreßt.

### Bestimmung des Wärmestandes

Die gefügten Probekörper werden 3 Tage bei Raumtemperatur gelagert. Der Wärmestand wird in einem Universal Wärmeschrank mit automatischer Temperaturregelung bestimmt. Dazu wird das nicht verklebte Ende des Buchenholzprüfkörpers oben an einer Halterung mit einer Flügelschraube befestigt. Das überstehende Ende des PVC-Prüfstreifens wird im 180° Winkel senkrecht nach unten mit einem 500 g Gewicht belastet. Die Starttemperatur beträgt 50 °C. Jeweils nach 1 Stunde wird die Temperatur automatisch um 10 °C erhöht bis es zur vollständigen Ablösung (bzw. zum Abriß) des PVC-Streifens vom Holzprüfkörper kommt.

| **Ergebnisse (Doppelbestimmung)** | |
|---|---|
| **Lagerzeit der Zubereitung** | **Wärmestand*** °C |
| sofort | > 120 (Folienriß) |
| | > 120 |
| 1 Woche | > 120 |
| | > 120 (Folienriß) |
| 5 Wochen | >120 |
| | 5 Minuten 120° |
| 8 Wochen | 10 Minuten 120° |
| | > 120 |
| 9 Wochen | > 120 |

| | |
|---|---|
| *: Wärmestand der Verklebung mit Dispercoll® U 54 unvernetzt: ca. 90°C | |

### 3.3 Schlußfolgerungen zu: Einfluß der Lagerung der flüssigen Klebstoffzubereitung auf die Klebeigenschaften nach Wärmeaktivierung

Alle oben durchgeführten Versuche belegen, daß
I. auch nach langer Lagerzeit der Zubereitung des erfindungsgemäß nicht durch Vorbehandlung desaktivierten Feststoffisocyanats nach der Verklebung eine Vernetzung des Klebstoffpolymers stattfindet,
II. daß zur Auslösung der Vernetzung (im Gegensatz zur Beschreibung in EP-A 0 922 720) weder eine Temperung noch ein Katalysator benötigt wird, und
III. daß statt dessen die Vernetzung durch die sehr kurzzeitige Infrarotbestrahlung der Klebeschicht ausgelöst wird, welche die zur Verklebung ohnehin nötige Dekristallisation des Polymers bewirkt.
IV. Wird die zur Dekristallisation der Polymerkette erforderliche Temperatur nicht überschritten, erfolgt keine Verbesserung der Erweichungstemperatur der Klebung.

### 4. Einfluß der Lagerdauer des offenen Klebefilms auf die Vernetzung nach wärmeaktivierter Verklebung.

### 4.1 Softening Point (Scherbelastung) nach wärmeaktivierter Verklebung Substrat: Nora-Gummi (SBR

Die nach 1. hergestellte, frische Zubereitung wird auf Prüfkörper aus Nora-Gummi aufgetragen und bei Raumtemperatur getrocknet. Nach 1, 2, 3, 4 und 8 Wochen Lagerung der beschichteten Substrate (offen im Klimaraum bei 23°C) erfolgt die Verklebung gemäß der Beschreibung unter 3.1 nach 10" Wärmeaktivierung. Die Prüfung ergibt die folgenden Erweichungstemperaturen (Softening Points):

| **Offene Lagerdauer der beschichteten Proben** | **Softening Point (°C)** |
|---|---|
| 1 Woche | 134 |
| 2 Wochen | 113 |
| 3 Wochen | 91 |
| 4 Wochen | 85 |
| 8 Wochen | 71 |

Aus diesem Ergebnis folgt, daß die erfindungsgemäßen Klebfilme , welche - im Gegensatz zu EP-A 0 922 720 - das Feststoff-Isocyanat ohne desaktivierende Vorbehandlung enthalten, über den Verlauf von 2 Wochen ohne Nachteil für die Vernetzbarkeit gelagert werden können. Diese verfügbare Zeit ist für die üblichen Anforderungen bei der industriellen Verarbeitung des Klebstoffs völlig ausreichend und erlaubt auch eine begrenzte Zwischenlagerung vorbeschichteter SBR-Gummi-Flächen.

### 4.2 Wärmeschälfestigkeit nach Verklebung durch Heißverpressen Substrat Hart-PVC/Buchenholz

Die nach 1. hergestellte, frische Zubereitung wird auf die Prüfkörper aus gehobeltem Buchenholz aufgetragen und bei Raumtemperatur getrocknet. Nach 1, 2, 3, 4 und 8 Wochen Lagerung der beschichteten Substrate (offen im Klimaraum bei 23°C) erfolgt die Verklebung und Prüfung gemäß der Beschreibung unter 3.2 durch Heißverpressen bei einer Fugentemperatur von 90°C .

| **Ergebnisse:** | |
|---|---|
| **Offene Lagerdauer der be- schichteten Proben** | **Wärmestand* °C** |
| sofort | > 120 |
| 1 Woche | > 120 |
| 2 Wochen | > 120 |
| 4 Wochen | > 120 |
| 9 Wochen | > 120 |

| | |
|---|---|
| *: Wärmeschälfestigkeit der unvernetzten Verklebung mit Dispercoll® U 54: ca. 90°C | |

Wie aus 4.1. folgt aus diesem Ergebnis ebenfalls, daß die Lagerfähigkeit der erfindungsgemäß ohne desaktivierende Vorbehandlung des Feststoff-Isocyanats hergestellten Zubereitung auch über längere Zeit eine Verklebung erlaubt, ohne daß bei den dort geltenden Anforderungen über 9 Wochen eine Verringerung der Vernetzbarkeit sichtbar wird.

## Patentansprüche

1. Wäßrige Dispersionen isocyanatreaktiver Polymere, **dadurch gekennzeichnet, daß** sie Di- und/oder Polyisocyanate mit Schmelz- bzw. Erweichungstemperaturen von > 30°C als feinteilige Pulver ohne vorhergehende desaktivierende Vorbehandlung mit einem mittleren Teilchendurchmesser von im wesentlichen unter 100 µm, bevorzugt < 50 µm enthalten.

2. Wäßrige Dispersionen gemäß Anspruch 1, **dadurch gekennzeichnet, daß** sie eine Viskosität von mindestens 50 mPas, bevorzugt von mindestens 2000 mPas auf weisen.

3. Wäßrige Dispersionen gemäß Ansprüchen 1 bis 2, **dadurch gekennzeichnet, daß** als Polymere Polyurethane verwendet werden, die aus kristallisierten Polymerketten aufgebaut sind, welche bei Messung mittels thermomechanischer Analyse bei Temperaturen < +110 °C, bevorzugt bei Temperaturen < +90 °C und besonders bevorzugt bei Temperaturen < +65 °C zumindest partiell dekristallisieren.

4. Wäßrige Dispersionen gemäß Ansprüchen 1 und 2, **dadurch gekennzeichnet**, daßals isocyanatreaktive Polymer-Dispersionen Polymerisate und Copolymerisate des 2-Chlorbutadiens verwendet werden,

5. Wäßrige Dispersionen gemäß Ansprüchen 1 bis 4, **dadurch gekennzeichnet, daß** als Polyisocyanate Dimerisierungsprodukte, Trimerisierungsprodukte und Harnstoff-Derivate des TDI bzw. IPDI verwendet werden.

6. Verfahren nach den Ansprüchen 1- 5, **dadurch gekennzeichnet, daß** für die aus Polymerdispersionen und ggf. Emulgatoren, Verdickern, weiteren Hilfsstoffen sowie Feststoffisocyanaten bestehenden Zubereitungen die pulverisierten Feststoffisocyanate ohne vorhergehende desaktivierende Vorbehandlung eingesetzt werden.

7. Verwendung der wäßrigen Dispersionen gemäß Ansprüchen 1 bis 6 zur Herstellung von Beschichtungen oder Klebeverbindungen.

8. Verwendung der wäßrigen Dispersion nach Anspruch 7 zur Herstellung von Klebeverbindungen, welche ohne nachträgliche Wärmebehandlung im Verlauf einiger Tage bei Raumtemperatur vernetzen.

9. Verfahren zur Herstellung einer Klebeverbindung, indem auf dem zu verklebenden Substrat eine Dispersion gemäß Ansprüchen 1 bis 7 aufgetragen und anschließend getrocknet wird, und der getrocknete Klebstoffauftrag durch kurzzeitiges, vorzugsweise weniger als 5 Minuten andauerndes Erwärmen auf T > 65°C, bevorzugt auf eine Temperatur von 80°C < T < 110°C dekristallisiert und im dekristallisierten Zustand mit dem zu verbindenden Substrat gefügt wird.

10. Verfahren nach Anspruch 9, **dadurch gekennzeichnet, dass** zur Dekristallisation des auf dem ersten der beiden zu verbindenden Substrate aufgetragenen Klebfilms der Wärmeinhalt des zweiten zu verbindenden Substrats verwendet wird, bei welchem es sich um ein durch Erwärmung auf Temperaturen von vorzugweise < 120°C plastisch erweichtes Folienmaterial ohne Klebstoffvorbeschichtung handelt.

11. Verfahren nach Anspruch 10, **dadurch gekennzeichnet, daß** die Folie im Kontakt mit dem Klebefilm eine Temperatur oberhalb der Dekristallisationstemperatur des Polymers im Klebfilm, bevorzugt oberhalb 65°C und besonders bevorzugt oberhalb 80°C besitzt und die Anpreßzeit vorzugsweise < 5 Minuten ist.

## Claims

1. Aqueous dispersions of isocyanate-reactive polymers, **characterised in that** they comprise diisocyanates and/or polyisocyanates having melting or softening points of > 30°C as finely divided powders not having previous deactivating pre-treatment and having an average particle diameter of substantially less than 100 *µ*m, preferably < 50 *µ*m.

2. Aqueous dispersions according to Claim 1, **characterised in that** they have a viscosity of at least 50 mPas, preferably at least 2000 mPas.

3. Aqueous dispersions according to Claims 1 to 2, **characterised in that** as the polymers polyurethanes are used which are constructed of crystallised polymer chains which decrystallise at least partially at temperatures < +110°C, preferably at temperatures < +90°C and particularly preferably at temperatures < +65°C, measured by thermomechanical analysis.

4. Aqueous dispersions according to Claims 1 and 2, **characterised in that** polymers and copolymers of 2-chlorobutadiene are used as the isocyanate-reactive polymer dispersions.

5. Aqueous dispersions according to Claims 1 to 4, **characterised in that** dimerisation products, trimerisation products and urea derivatives of TDI or IPDI are used as the polyisocyanates.

6. Process according to Claims 1 to 5, **characterised in that** for the preparations consisting of polymer dispersions and optionally emulsifiers, thickening agents, further auxiliary substances as well as solid isocyanates the powdered solid isocyanates are used without previous deactivating pre-treatment.

7. Use of the aqueous dispersions according to Claims 1 to 6 to produce coatings or bonded joints.

8. Use of the aqueous dispersion according to Claim 7 to produce bonded joints which cure at room temperature over the course of a few days without subsequent heat treatment.

9. Process for the production of a bonded joint, in that a dispersion according to Claims 1 to 7 is applied to and is then dried on the substrate to be bonded, and the dried adhesive applied is decrystallised by brief heating, preferably for less than 5 minutes, to T > 65°C, preferably a temperature of 80°C < T < 110°C, and in the decrystallised state is joined to the substrate to be bonded.

10. Process according to Claim 9, **characterised in that** in order to decrystallise the adhesive film applied to the former of the two substrates to be bonded, there is used the caloric content of the second substrate to be bonded, a sheeting material softened to plasticity by heating to temperatures of preferably < 120°C and not pre-coated with adhesive.

11. Process according to Claim 10, **characterised in that** the temperature of the sheeting in contact with the adhesive film is above the decrystallisation temperature of the polymer in the adhesive film, preferably above 65°C and particularly preferably above 80°C, and the pressing time is preferably < 5 minutes.

## Revendications

1. Dispersions aqueuses de polymères réactifs avec les isocyanates, **caractérisées en ce qu'**elles contiennent des di- et/ou polyisocyanates ayant des températures de fusion ou de ramollissement supérieures à 30°C à l'état de poudre fine et qui n'ont pas subi de traitement préalable de désactivation, à un diamètre de particule moyen essentiellement inférieur à 100 µm et de préférence inférieur à 50 µm.

2. Dispersions aqueuses selon la revendication 1, **caractérisées en ce qu'**elles ont une viscosité d'au moins 50 mPa.s, de préférence d'au moins 2 000 mPa.s.

3. Dispersions aqueuses selon les revendications 1 et 2, **caractérisées en ce que** les polymères utilisés sont des polyuréthannes constitués de chaînes polymères cristallisables qui, aux mesures par analyse thermomécanique, subissent une décristallisation au moins partielle à des températures inférieures à +110°C, de préférence à des températures inférieures à +90°C et dans les meilleures conditions à des températures inférieures à +65°C.

4. Dispersions aqueuses selon les revendications 1 et 2, **caractérisées en ce que** les dispersions de polymères réactifs avec les isocyanates sont des polymères et copolymères du 2-chlorobutadiène.

5. Dispersions aqueuses selon les revendications 1 à 4, **caractérisées en ce que** les polyisocyanates sont des produits de dimérisation, des produits de trimérisation et des dérivés à fonctions urée du TDI ou de l'IPDI.

6. Procédé selon les revendications 1 à 5, **caractérisé en ce que**, pour les compositions consistant en dispersions de polymères et le cas échéant agents émulsionnants, agents épaississants, d'autres produits auxiliaires et des isocyanates solides, on utilise les isocyanates solides en poudre non soumis à un traitement préalable de désactivation.

7. Utilisation des dispersions aqueuses selon les revendications 1 à 6 pour l'application de revêtements ou la réalisation de liaisons par collage.

8. Utilisation des dispersions aqueuses selon la revendication 7 pour la réalisation de liaisons par collage qui, sans traitement complémentaire à la chaleur, réticulent en quelques jours à température ambiante.

9. Procédé pour la réalisation d'une liaison par collage dans lequel, sur le substrat à coller, on applique une dispersion selon les revendications 1 à 7 puis on sèche et on décristallise la colle appliquée et séchée par un court chauffage, durant de préférence moins de 5 min, à une température supérieure à 65°C, de préférence à une température comprise entre 80 et 110°C, et on joint à l'état décristallisé avec le substrat à associer.

10. Procédé selon la revendication 9, **caractérisé en ce que**, pour la décristallisation de la pellicule de colle appliquée sur le premier des deux substrat à associer on exploite la chaleur contenue dans le deuxième substrat à associer, lequel consiste en une matière en feuille ramollie et plastifiée par chauffage à des températures de préférence inférieures à 120°C et non revêtue de colle.

11. Procédé selon la revendication 10, **caractérisé en ce que** la feuille en contact avec la pellicule de colle est à une température supérieure à la température de décristallisation du polymère de la pellicule de colle, de préférence supérieure à 65°C et plus spécialement à 80°C et **en ce que** la durée de compression est de préférence inférieure à 5 min.
